# EUROPEAN PATENT APPLICATION

(11) **EP 2 180 673 A1**
(43) Date of publication of application: **28.04.2010**
(21) Application number: 08018493.0
(22) Date of filing: 22.10.2008
(51) Int. Cl.: H04M 1/725

(54) **Method of contextual messages in communication devices**

(71) Applicant: Greener Box LLC, Houston TX 77062 (US)
(72) Inventor: Moramoarco, Anna Maria, 20135 Milano (IT)
(74) Representative: Forattini, Amelia

(57) **Abstract**

This invention relates to any digital device able to send and receive SMS (Short Message Service) and/or MMS (Multimedia Message Service) and/or IM (Instant Messaging). This invention also relates to a process that can be achieved by this device. Known digital communication devices transmit and/or receive text messages containing only alphanumeric characters, because the protocol only allows SMS or MMS, which is an extended single text messages, to send strings of characters. In order to format a text message, the communication devices can only transform known characters of text messages in other alphanumeric characters based on a different alphanumeric table of characters including the format information; otherwise the devices will present the message in the default format pre-set in the devices. Furthermore, those digital devices transmit and/or receive text messages which are intelligible to any person reading them either on the sender/receiver device or intercepting it during their transmission.

## Description

The present invention relates to communication devices, and more specifically, the invention relates to sending and receiving formatted messages between users of digital communication devices. The communication terminals are able to communicate through a network.

The network for the communication interchange may be a wireless or wired telecommunication networks, including the World Wide Web WWW.

Messaging in text form is widely used in cellular radio communication networks for exchange of information between at least two clients using a communication device. The Short Message Service SMS and Multimedia Message Service MMS has been developed to allow the display on mobile telephones of text messages transmitted as SMS/MMS single message to a single user or broadcasted as a group message to a set of users. The displaying of an SMS/MMS received is very similar on all mobile telephones. The text of the SMS/MMS received is simply displayed on the screen of the telephone without the user being able to modify the way in which it is displayed.

Certain mobile terminals have the ability to connect to the World Wide Wide WWW, further referred to as the Internet, and are able to send and receive electronic messages, for instance emails. The displaying of a message received by the mobile terminal is very similar to the displaying of a SMS, i.e. the mobile terminals simply display the text of the message received. Both mobile and not-mobile terminals can access other types of communication services, such as Instant Messaging IM services, which are very similar to the SMS and MMS message services, except that they are managed by specific external programs and lead to a thread view, i.e. the interchanged messages are displayed in the order sent in the specific IM application.

Known digital communication devices (such as in the SMS, MMS, intended as extended single text messages, and IM communication) transmit and/or receive text messages containing only alphanumeric characters, because the protocol only allows to send e.g. strings of characters. If you want to format a text message, the devices can only transform known characters of text message in other alphanumeric characters based on a different alphanumeric table of characters including the format information; otherwise the devices will present the message in the default format pre-set in the communication devices.

In addition, the digital communication devices transmit and/or receive text messages which are intelligible to any person reading them either on the sender/receiver device or intercepting it during their transmission.

The invention relates to any digital communication device able to send and receive messages over a data communication network, such as Short message service SMS, and/or Multimedia Message Service MMS and /or Instant Messaging IM. Method to format messages on communication devices, the method comprising:
composing a message in a first communication device; storing formatting objects in a storage means; retrieving said formatting objects from said repository during composition of said message; applying said formatting objects to said message on said first communication device; transmitting said formatted message via a data communication network; providing means for receiving said message on a second communication device; decoding said received formatted message on said second communication device; displaying said formatted message on said second communication device.

The method of the invention allows the digital devices to transform messages from a known format into a format different than the standard format provided by the digital devices. The method may include a secure mechanism so that only the intended reader may read the messages transferred over the data communication network.

The present invention further provides a communication device carrying out the method of the present invention, the device including, means for inputting characters; means for displaying; means for storing data; communication means adapted to send or receive messages transmitted over a data communication network, means for composing a message; means for including formatting objects in said message.

The present invention is intended to illustrate the service for mobile devices and computers capable of allowing the transmission of text messages using tables of standard characters. The invention relates to any digital device able to send and receive Short Message Service SMS and/or Multimedia Message Service MMS and/or Instant Messaging Service IMS.

The aim of the present invention is to allow any user of a SMS, MMS or IM communication system to format the written message using characters other than the ones provided by a standard system. The invention further allows the use of tables having standard characters, i.e. tables associating different characters as represented on the keypad or associating graphs and/or still images and/or videos and/or sounds to characters from the keyboard. The characters either send or received by the communication device are standard characters. The table may be used to determine based on the input text how to respond to the inputted text. Based on the input text certain actions like viewing items or launching an application may be initiated. The service, to work in its potential, needs the user, who sends the message and the recipient of the message to share not only the system but also the table of characters used in the composition of the message.

The invention provides a digital device which has the capabilities of making the message readable in a format different from the standard format and making it readable only by the recipient of the message. Furthermore the invention associates to an text input from the user the capability to launch instructions in the device as set by referred digital tables.

That purpose is achieved with a method with a standard procedure for transmission and reception, whose main features are specified respectively in following claims and the following description.

Taking into account that two digital devices do have installed and operating the application that is made for applying the method to those devices, every message sent between the two devices will be shown in the application only. This is due to a specific instruction inserted in the text message itself, able to redirect the message to the application instead of to the standard messaging application. This method allows the user to deviate the message to this application, that being password protected de facto reserves the access to the message to the user only.

Taking into account that the two users decided to use the same alphanumeric table of characters and that this is different from the standard on the two devices, every message sent between the two devices will be shown in the devices in the format related to the chosen shared alphanumeric table of characters. If the chosen alphanumeric table of characters is codified, i.e. the display map of glyphs is different from the standard display, wherein the standard display refers to the ASCII table, not only the method will show on both devices the message in the chosen format but the text message transmission will be of a codified sequence of characters set by the different code map used in the chosen alphanumeric table of characters. This method allows the user to code the message for the transmission only, ensuring a further privacy to it.

Furthermore, these alphanumeric tables of characters could be used for further functions of the communication device, as database including contact information, user preferences and other information sets defined by the user or preset for the digital device. All those alphanumeric tables of characters could work separately or combined in the communicating functioning of the device.

Further advantages and characteristics of the device and the procedure under this invention will be obvious to experts in the field by the following detailed description even if not restricted to the following description form.

The present invention describes an electronic messaging system in which the user can adjust certain parameters of the text processing program serving to present the message on his mobile device or computer (in IM applications, differently from the emoticons), for example the font, the size, the colour or the case of the characters or the line spacing of all or some of the text to be displayed. This adjustment varies as a function of characteristics of the incoming messages such as the identity of the sender, the subject or the priority of the message. Moreover, the program can overcome constraints in preparing, i.e. writing, and displaying texts on most types of communication devices caused by hardware, e.g. keyboard and display, and system software configurations, e.g. localisation, language settings, which is particularly prominent on mobile phones.

Further characteristics and advantages of the invention will be more apparent by the following description of an embodiment of the invention, illustrated, by way of example in the enclosed drawings wherein
Figure 1 is a diagram of a system using the methods and systems according to the present invention in a preferred embodiment;
Figure 2 is a diagram of the application platform installed of the communication devices according to the present invention;
Figure 3 is a schematic diagram of the data structure in the application in a preferred implementation;
Figure 4 is a schematic diagram of the use of alphanumeric tables of characters in the system.
Figure 5 shows a flowchart of the application logical structure pertaining to the processing by mobile of the present in a preferred embodiment;
Figure 6 shows a flowchart of the messages handling process of a communication device in a preferred embodiment;
Figure 7 shows a flowchart of the write process of a message in a preferred embodiment;
Figure 8 shows a flowchart of the read process in a preferred embodiment;
Figure 9 is a flowchart of the messages options process in a preferred embodiment;
Figure 10 is a flowchart of the contact handling process in a preferred embodiment;
Figure 11 is a flowchart of the system manager process in a preferred embodiment;
Figure 12 is an overview of the options settings in the application in a preferred embodiment;
Figure 13 is an overview of the user interface and interaction processes in the application in a preferred embodiment;
Figure 14 is a diagram of a send process in a preferred embodiment;
Figure 15 is a diagram of a receive process in a preferred embodiment;
Figure 16 is a diagram of the font and dictionary assignment process in a preferred embodiment;
Figure 17 is a diagram of the dictionaries and font substitution process in a preferred embodiment;
Figure 18 is a diagram of the security mechanisms of the present invention;
Figure 19 is a diagram of the security mechanism in a preferred embodiment of the invention.

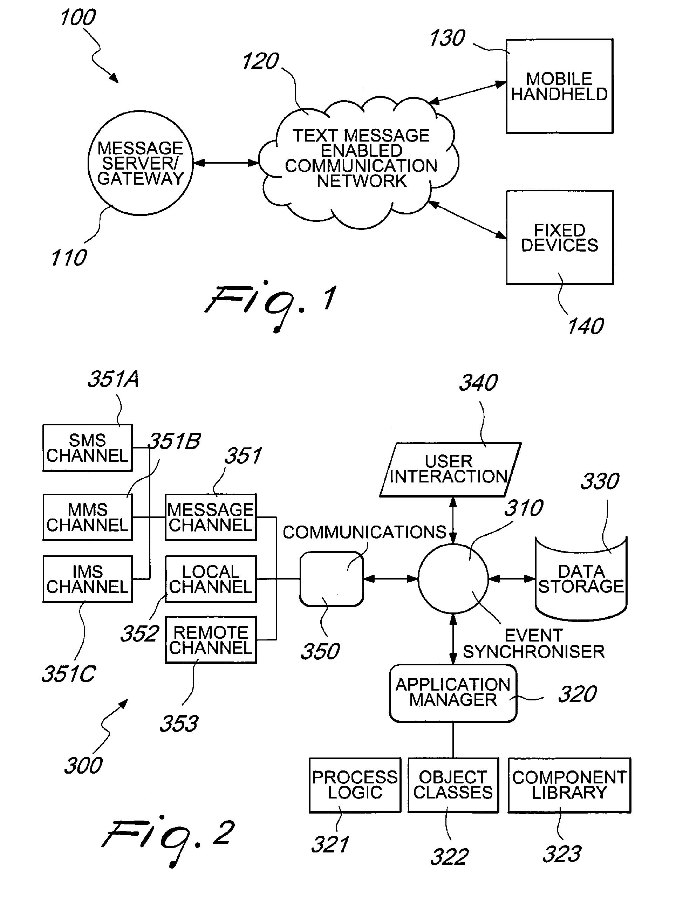

With reference to figure 1, a text messaging communication system 100 incorporating features according to a preferred embodiment of the invention comprises a message server and/or gateway, a text message enabled communication network 120, a mobile handheld device 130 and fixed devices 140.

The message server, the gateway or a combination thereof may communicate bi-directional with the communication network 120. The communication network is capable of handling messages, for instance, Short Message Service SMS messages, Multimedia Message service Messages MMS and Internet Messaging IM messages. The mobile handheld devices, such as mobile phones, Personal computers PCs, Personal digital assistants PDAs, may interchange data bidirectional with the communication network 120. Similarly, the fixed devices, such as PCs, Work Stations, Servers, etc., communicating bi-directional with the communication network 120.

Fig. 2 shows the application platform 300 including an event synchroniser 310 centrally connected to a user interaction module 340, data storage 330, an application manager 320 and the communications module 350. The data storage 330 may include in the mobile terminal 130. The user interaction module 340 allows performing a plurality of functions related to a message, as well as administrative functions. The communications module or communication manager 350 is configured to process incoming messages received at the SMS channel 351A, the MMS channel 351B and the IMS channel 351C. Any received messages, such as SMS, MMS and IMS are routed through a message channel module 351, which is adapted to communicate with the communications module 350. The communications module 350 further processes data from the local channel module 352 and the remote channel module 353. The local channel module 352 is adapted for handling internal data communication of the device. The remote channels module 353 is adapted to allow processing any data exchange between the mobile terminal and external communication devices, such as wireless communications, e.g. Bluetooth connections and infrared connections, or wired connections via USB or direct cable links. The event synchroniser 310 further communicates with an application module 320, which centrally controls connected process logic module 321, the object classes 322 and the component library 323.

The system is event driven and the event synchroniser 310 manages the events that occur in the system according to the logical processes 321 defined in the application manager 320 that trigger software functions in the component library 323 and class object 322 methods. These processes may be triggered by events that come from the application logic 321, user interaction 340, data storage 330 changes and from communications events 350, which will use the message channel 351 principally for messaging and the local 352 and remote 353 channels for auxiliary functions.

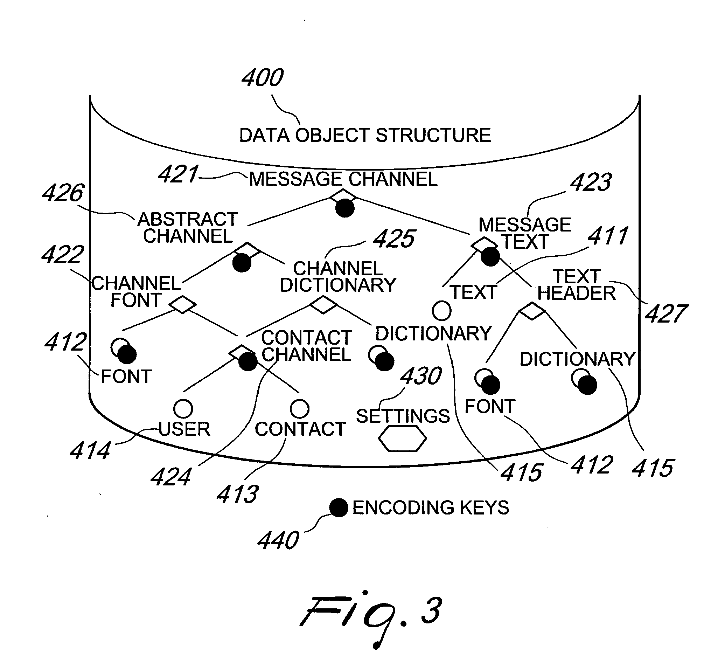

Fig. 3 is a schematic diagram showing the data object structure in the application in a preferred implementation. The data object structure 400 is used by the system enabling data persistence on the communication device 130, 140, using a flexible data management system. The data object structure 400 holds the objects that contain or link to the data used by the application and the relationships between them. The system uses data objects, such as text objects 411, font objects 412, contact objects 413, user objects 414 and dictionary objects 415, that are configured according to the data object structure 400 and related among themselves by connection objects. The data objects are shown in Fig. 3 as non-filled circles.

The data structure enables the use of different types of data storage means, but preferably uses a Record Management System RMS, which is available on all Java enabled mobile devices, such as mobile phones 130. The data structure can be preconfigured and can respond to events that occur on the communication channels 350, in particular from the message channel module 351, from user interaction module 330 and from within the application processes running at the application manager module 320 themselves. By using the settings 430 it is possible to create preferences and default values for the processing, these settings are parametric settings which enable the setting of default values and preferences enabling to set the environment of the application on a mobile device. The data object structure 400 has a low footprint, i.e. is normalized and can be distributed across different media, and policies to enable it to respond to different mobile terminal 200 characteristics.

The objects having a rhombus shape are connection objects that allow the content build by the data objects to be associated between themselves creating a dynamic structure. These objects describe links to the data objects and evaluate the relationships between objects. The connection objects include a message channel object 421, an abstract channel object 426, a font channel object 422, a contact channel object 424, a channel dictionary object 425, a message text object 423 and a text header object 427. The message object 421 is a link between a abstract text and a text, the channel font object 422 links a font to a channel, the message text object 423 allows a font and dictionary to be applied to a message text, the contact channel object associates a sender and a receiver, the channel dictionary object 425 links a dictionary to a channel, the abstract channel object 426 is a channel that has a dictionary and a font associated and a text header object 427 links a text to a font and a dictionary. The filled circles in Fig. 3 associated with the objects message channel 421, abstract channel 426, font 412, contact channel 424, dictionary 415, message text 423, font 412 and dictionary 415 are encoding keys 440, which may be associated to any of these objects for further enhancement of security. More specifically, all objects in the system can be given an encoding key 440 and may be applied to at least one of the objects locate in the storage means, and these will be applied by the processes according to their configuration. The encoding mechanism is initiated in the originating download site and transmitted by the download of the application and language objects. Further encoding keys 440 can be applied to any object directly in the communication flow for any reason.

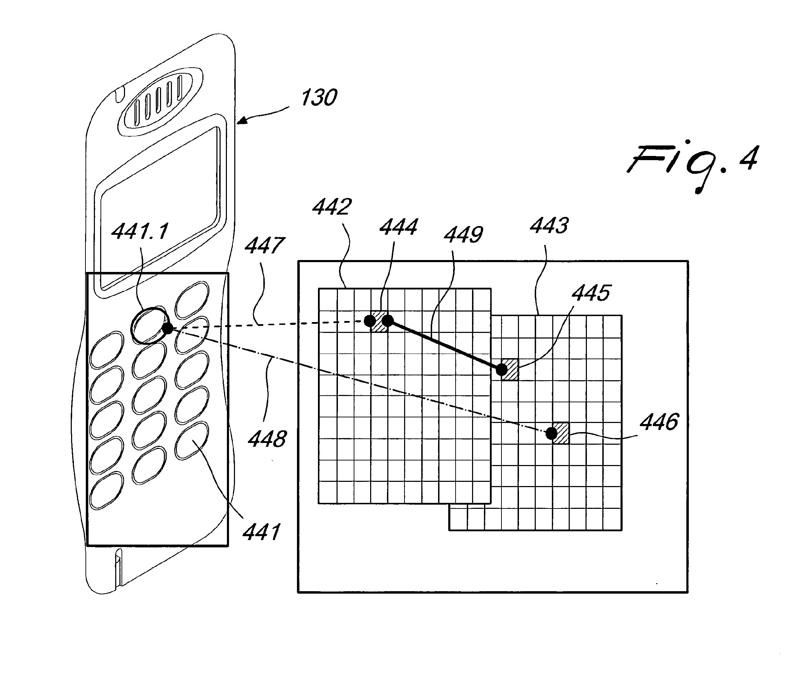

Fig. 4 shows the interaction between the alphanumeric table of characters on the device 441 and one or a plurality of alphanumeric tables 442, in the application.

These interactions are logical direct or indirect links between a physical action on the device table 441 that is a consequent instruction on one or several tables 442, 443 in the application. The device table 441 may include a standard keyboard on a mobile device having alphanumeric symbols imprinted thereon for inputting characters.

Taking into account that each part in an application table 442, 443 is an object including an unique ID and an instruction to action, that means the user can rule the messaging activity using the one or the plurality of combined tables to send or manage messages in a contextual way.

In terms of simple example, a keystroke on the device table 441, such as by pressing the key 441.1, could lead the application to show a certain character 446 because that keystroke is directly linked, demonstrated by the connection line 448, to that certain character 446 on a formatting table 443. But, if a pre-selection of a contact was done and that contact has linked, shown by the connection line 449, to a certain different formatting table 442, the same keystroke could indirectly link, shown as connection line 447, to a different character 445. In this example, after the user performs a keystroke on button 441.1 the table object 444 is linked to a first table 442 and to the second table 443. There may be a plurality of alphanumeric tables included in the system, if other characters and tables need to be included.

The way these links are managed follows a very simple rule: any object must have a value in reference to the "who" (sender, receiver and their relation), "when" (time of the communication activity in the timeset of all the used objects), "what" (the meaning of the message, being it a simple text or an instruction), "where" (the chosen medium - SMS, ...) and "how" (all the mandatory and customized rules associate to the communication activity). That means that contextually any object will be activated only in the condition it can be activated, that any object can modify the communicating activity and that any object (or set of objects or their relations), if related to a person, can be used to identify that person and regulate any communication with that person.

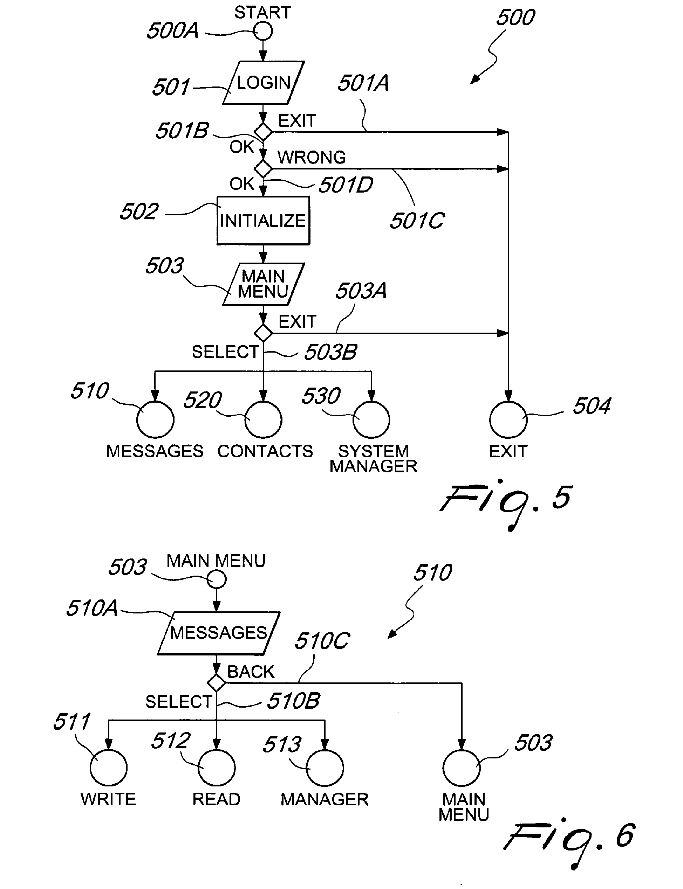

Fig. 5 shows the logical structure of the application process 500 pertaining to the processing by mobile terminals. Initiating from start 500A of the process, a login 501 is required. The login 501 may be entered manually by the user or may be setup automatically when the application is launched. The login 501 is checked for security reason before the process can continue, if the login 501 is interrupted the process branches to exit 501A, which leads to exiting out 504 of the application. In case the login 501 is incorrect the application exits as shown via the wrong- decision 501C branch. It the login 501 is valid, i.e. no exit of the login procedure and no invalid password have been entered, represented by the OK signs 501B and 501 D the application initializes procedure 502 is executed and presents the main menu 503 of the application. At this point the system is active and event listeners are active according to the application and settings. From the main menu 503, the user is able in the select 503B decision branch to choose from a plurality of options, which include entering into the messages 510, the contacts 520 or the system manager 530 submenus. The user has further the option to exit out of the application 503A.

Fig. 6 details the options of the messages menu 510. If a user selects from the main menu 503 the messages menu 510 is opened. From the messages menu 510, the user may select in the select 510B branch to write 511 a message, to read 512 a message or managing the message via the manager 513.

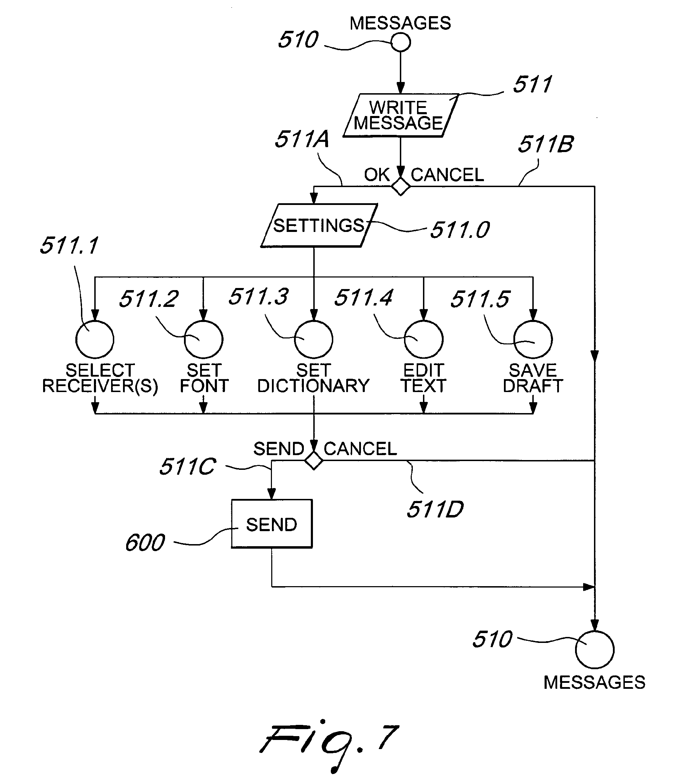

Fig. 7 details the process for writing a message. The user selects from the messages 510 menu the write 511 option, which launches a message compose form where the user is able to input a message and to see it in the currently selected font. The user can also decide to return the messages menu 510 by pressing cancel 511 B. Otherwise, the user may select OK 511A to enter the settings menu 511.0, which allows the user to manage the new text message. The user may chooses to set the font 511.2 and a dictionary 511.3, edit the text 511.4, save the text as a draft 511.5 for sending it at later point, and selects the contact(s), or receiver(s), 511.1 to whom it will be sent. Any changes made by setting a new font and/or dictionary will be assigned immediately to the message, and override previous settings. The user can exit from this function by pressing the cancel button at any time to return to the messages menu 510. When at least one contact via the select receiver(s) option 511.1 is selected the send 511C option becomes available, which will trigger the send message event 600 and returns to the messages menu 510. The select receiver(s) option 511.1 further allows the user to select the contact to whom the message will be sent. It also allows the user to further specify the font and dictionary to be used, which will have maximum priority in a default configuration. Otherwise if the user is not selecting any specific font and dictionary, the application uses a default configuration, which includes a standard dictionary and font. Any subsequent choice of the user overwrites this default configuration.

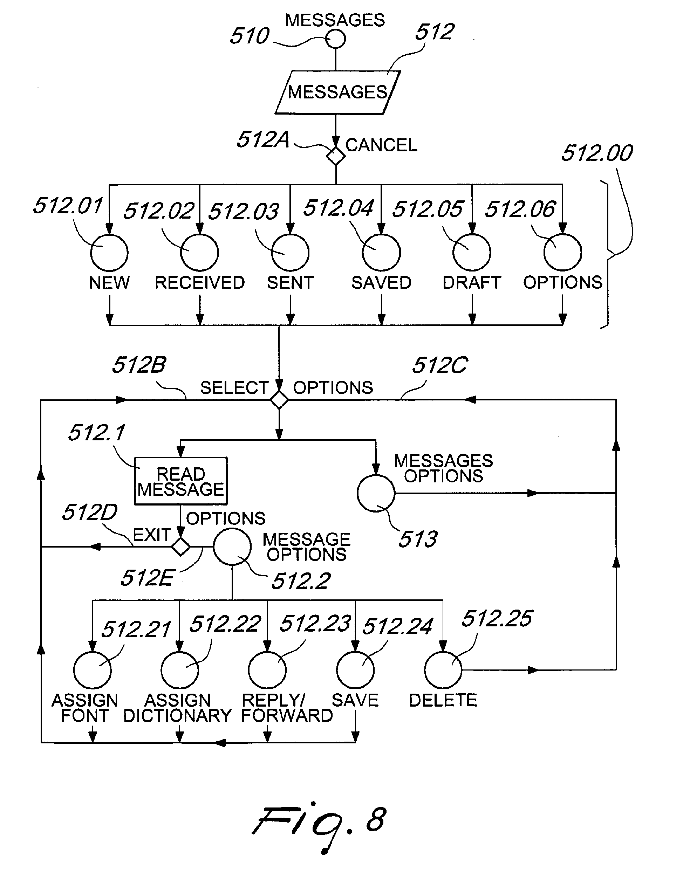

Fig. 8 is a flowchart demonstrating the read process of a message.
A user will be able to read the messages 512 that are saved in the application. These will be grouped into received messages, including new messages, sent messages, saved messages and drafts. The select message options 512-00 allows a user to select from the group of messages, such as new 512.01, received 512.02, sent 512.03, saved 512.04, drafts 512.05 together an options 512.06 item. The user will also be able to do certain message management actions, such as delete messages at this level. Having chosen the group of messages to view, the user will select press select to enter into the list of messages, or cancel to return to the main menu.

The user can select to cancel 512A out of any of the selections and is brought back to the messages 510 menu or can select the current row. If the selected item is a message then the message form is displayed. If the options 512.06 item is selected then the messages options form is displayed on the device, which allows the user to manage the messages 512 in the current group. The user can decide to read the message 512.1 and will see the message form which shows the sender, message date, and the message in its graphic form, according to the settings of the font and dictionary. The user can select the exit option 512D to go to the previous message list or to the messages options.

The message options 512.2 allow the user to change the font 512.21 and dictionary 512.22 to view the current message, to save or delete it. The user can also reply to a message and forward 512. 23 it, or continue its process if it is a draft, using the write process. When the operation is carried out the control passes back to the current message form except in the case of delete which will return to the message list.

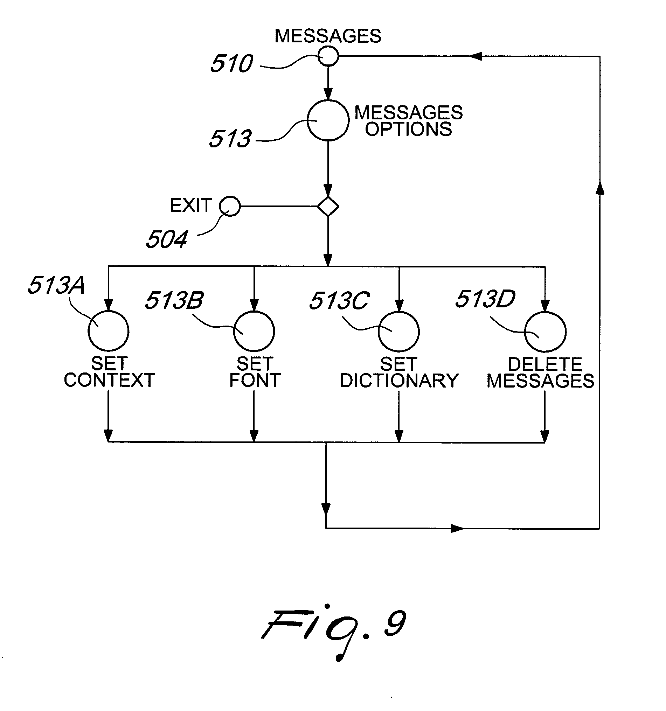

Fig. 9 shows further details of the messages options 513. The manage form allows to perform management tasks and to set options on the messages 510 area. The set context option 513A allows the user to organize messages by context, therefore managing the messages by topic and dialogue threads. Further options to be applied to a message are to set the font option 513B or to set the dictionary option 513C. The last option to select is to select to delete messages 513D. The user can exit from the messages area 510 any time via the exit branch 504.

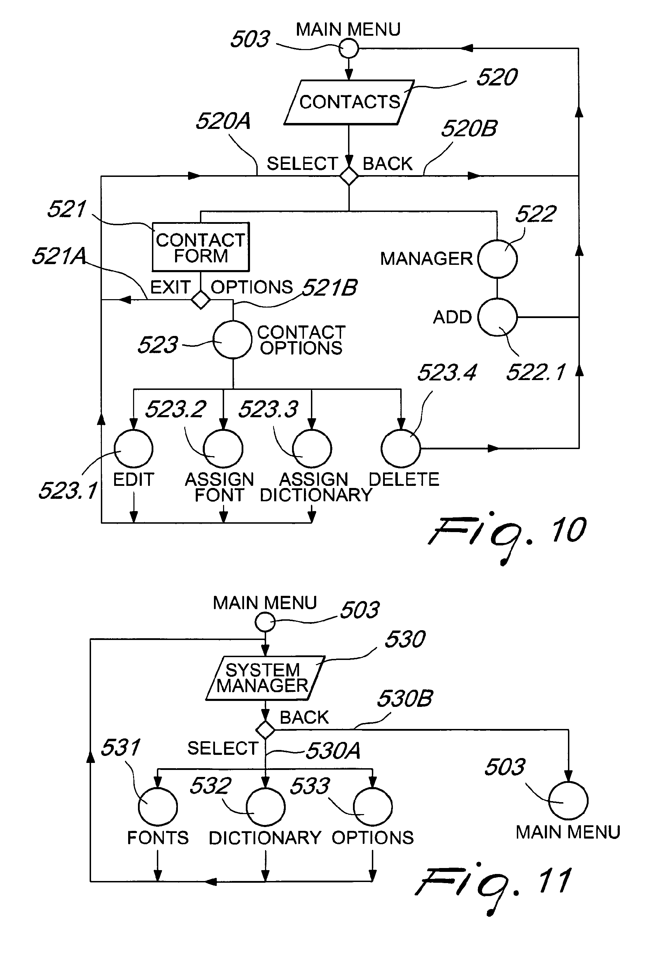

Fig. 10 shows the contacts 520 module. The contacts menu 520 the user will be presented with a list of Contacts 521 currently stored in the system, followed by the item manage 513. On pressing select the user will open the selected list item and view.the associated form. Pressing the back button will return to the main menu 503. Pressing select when placed on the manage item will take the user to the contacts options form, other wise it will go to the contact form. In particular the user can assign to a contact font and dictionary files that pertain that message. The manager module 522 allows adding 522.1 a new contact to the contact list 520.

Fig. 11 shows, starting from the main menu 503, the functions of the system manager 530. From the system manager menu 530 the user can select 530A either to manage the fonts 531, selecting a dictionary 532 or select further options and/or parameters available on the system 533. Selecting the back option 530B returns to the main menu 503.

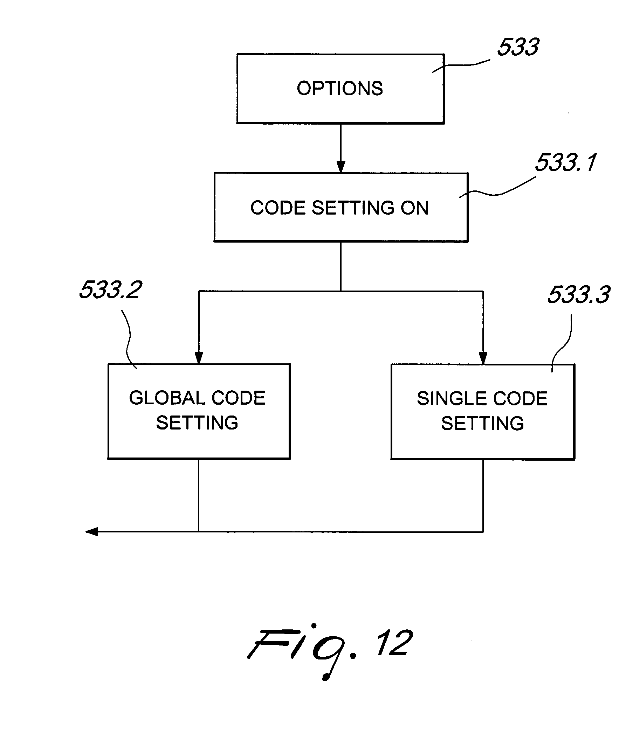

Fig. 12 shows the options menu 533, which allows the user to personalize the communication, by using a specific code on a specific object 533.2. This code may be either applied globally 533.3 to all the objects managed by the system, or to a subset of objects or to a single object 533.4, depending on the user's privacy setting decision. This is advantageous in countries which have certain legal rules for communication interchange. In addition, the system options may be put into a priority scheme, which is changeable by the user.

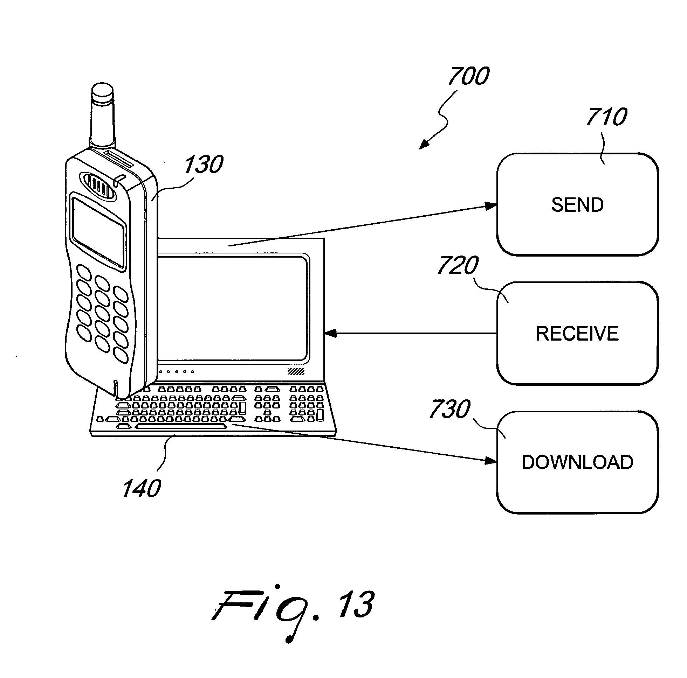

Fig. 13 shows a general overview of the system processes 700 for mobile terminals, such as a mobile phone 130 and/or a laptop 140, which are defined as send procedure 710 to send messages towards a recipient, a receive procedure 720 for receiving messages from the recipient, and a download procedure 730 for downloading objects onto terminals. The system uses the principles of the Messaging Systems such as Short Message Service SMS protocol, Multimedia Message Service MMS protocol, Instant Messaging IM protocol and rules for message delivery. The system further uses the Messaging Services for peer-to-peer communication over diverse communication networks. Apart from the initial download of the core software, all interaction such as Messaging, Software, Data and Font File download can be carried out by sending messages on the Text Message Network System 100 with no need for server side processing or gateway mechanisms, other than those used for message transport, and is not necessarily linked to specific device capabilities, although it can integrate them.

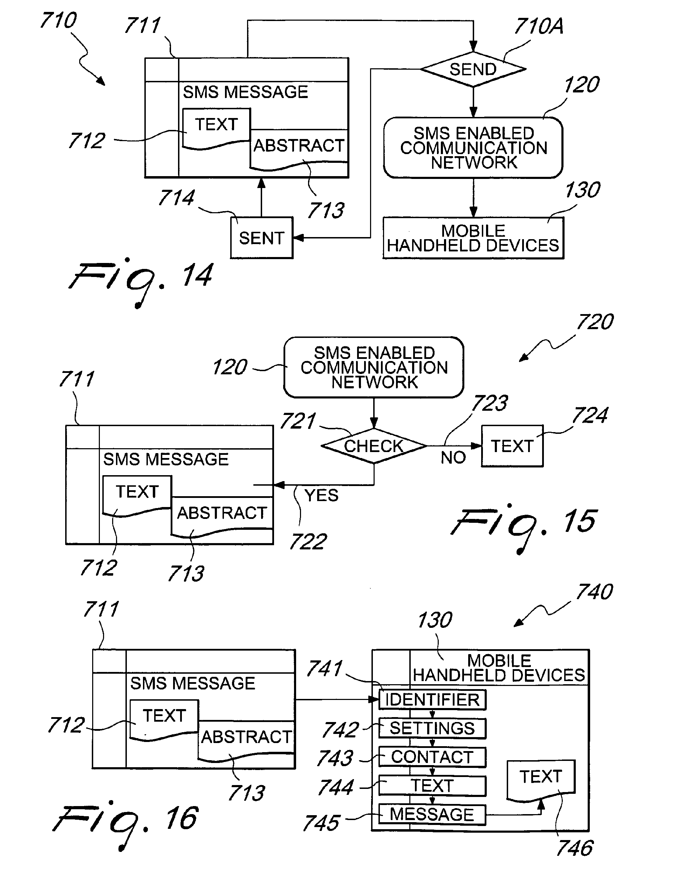

Fig. 14 shows further details of the message send procedure 710 of Fig. 1. Once a user has prepared a message, the message will be packed into a SMS message 711. The SMS message 711 comprises a text portion 712 and an abstract portion 713. When the message 711 is ready for sending, it will be send 710A according to standard SMS rules over the SMS enabled communication network 120 to the mobile handheld device 130. A copy of the sent message is the saved in the sent messages 714 entity. The saved message includes a status sent entity and its time stamp and is retrievable by the user via a sent messages list. The packing of the message follows the font and dictionary assignment process shown in Fig 14. A separate message is sent to each contact based upon the font and dictionary settings. Messages with the same configuration may be broadcast as a group message if the service is available.

Fig. 15 shows the receive 720 procedure, which is as follows, when a message is received on the incoming channel over the SMS enabled communication network, the message is placed in the incoming message area and unpacked into the data structure. A check 721 is performed by determining if special characters are embedded in the received message, such as characters outside the ASCII range. The check 721 identifies if the sender's message configuration is known by the receiver's mobile terminal. If the application according to the present invention is not present, i.e. installed on the receiver's device, the message will be displayed as a plain text SMS 724.

Fig. 16 shows the font and dictionary assignment 740, wherein the use of fonts and dictionaries is carried out as follows: Each font and dictionary has an identifier 741, which is unique.

The unique identifier enables different application use cases, which may enforce the use of fonts and dictionaries between contacts, or enable assisted file downloads. This can be set at the following levels, code settings 742, contact 743, text 744, message 745, with this order having, by default, ascending precedence. The precedence can be overridden by specific settings if available in the application. The code settings 742 and contact 743 settings are made on each mobile handheld device 130, text 744 and message 745 settings are set in the text 746 itself. The application will first look in the text part of the message and if it finds values will apply the relative font/dictionary. Otherwise it will look to see if the user and sender have font and/or dictionary values assigned to their abstract channels 713 otherwise the system defaults will be applied.

Once the font and dictionary are assigned to the read process the message can be read in its graphic format. When the message is sent to a mobile terminal 120, 130 which does not have the application installed, the message is displayed as a plain text message in a standard message application window provided with the mobile communication device.

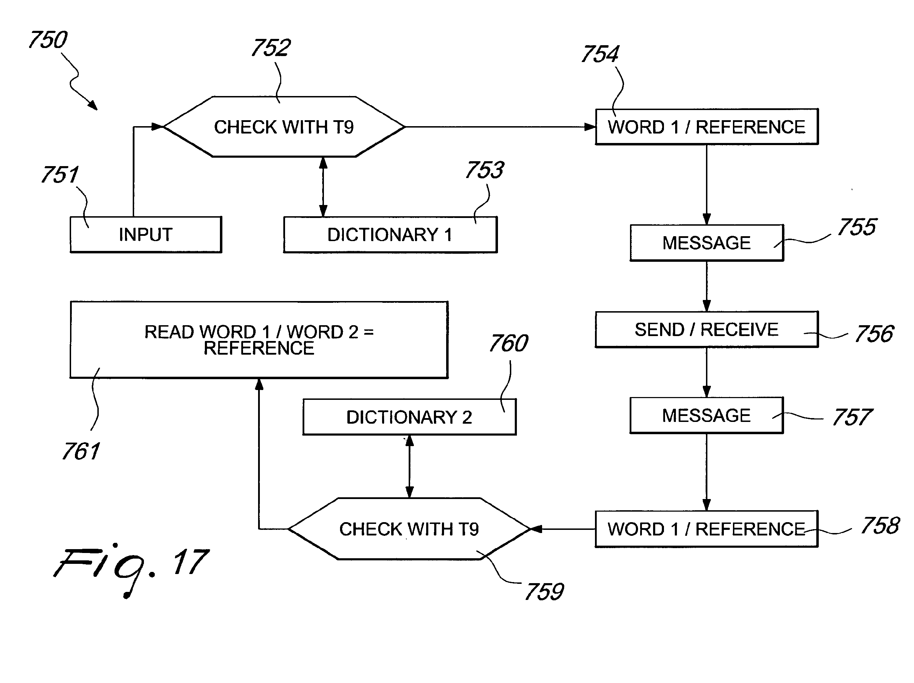

Fig. 17 shows the dictionaries and text substitution procedure 750, wherein the font files are associated with standard character sets. The font files are used to substitute the characters in the message with an associated glyph from the font file.

A messages composition includes inputting 751 the message into the message application form. A first dictionary 753 can associate strings, such as characters, words, phrases, etc., with graphics and glyphs. These can therefore be associated with lexical structures and will be available through analyses of the text. This is similar to the use of the predictive text technology, such as T9 and similar mechanisms, which is symbolized by the element "check with T9" 752. In the phase of constructing a text, the first dictionary 753 will be used to assist the data input 751, whereas in reading the output it will substitute the sub-strings with associated symbols and glyphs, if they have been specified.

The dictionary 753 is a structure that can influence or be influenced by the context of the message. If the receiver does not have the specified dictionary 753 used by the sender of the message text will be seen as inputted by the sender. The receiver of the message may decide to apply a different dictionary 760 from that specified by the sender.

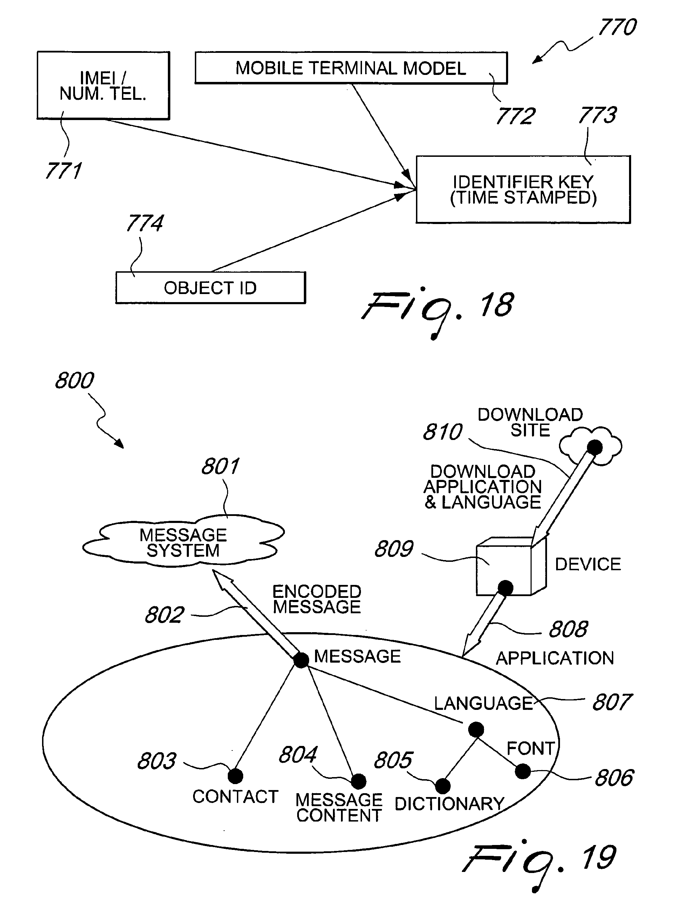

Figs. 18 and 19 show the security mechanisms 760 employed in the present invention to ensure the integrity of the system a security mechanism is employed, which uses multidimensional keys. The system uses the following procedure:

A client registers on the download site 811, e.g. the download site of a vendor, and receives from the vendor a unique identifier key 773, which may be associated with a password. The ID 773 authorizes the client to the download the application platform 810 followed by the font 806 and dictionary 805 files. The Client may order the software and complete the information required concerning the mobile terminal 130, 140, where it will be installed. This information may include the mobile terminal model 772 and the IMEI number and/or SMS and/or TEL. NUM. 771. This information is returned to the vendor's production department which assembles the application for the user and makes it available for download and issues an application ID needed to activate the application on the mobile device 809. Once the system is initialised it can be used to download font and dictionaries. The client will order font 806 and dictionaries 805 for every single mobile terminal. If the client has more than one mobile terminal, the process is repeated for each mobile terminal 809. Each ordered font/dictionary file will be assembled for the particular mobile terminal with an embedded identifier key 773. The unique identifier 773 will be based on the IMEI and/or TEL. number 771, terminal model 772, and object ID 774, which must correspond in order to activate the downloaded file. All items included in the identifier key 773 are time stamped to enable the implementation of periods of validity and expiry dates.

The download of the font 806 and/or dictionary 805 files can be initiated from either the application software running on the mobile terminal 809 or from a personal computer (not shown) and the medium for transfer of the files depends on the capabilities of the mobile terminal, such as Bluetooth, infrared, etc.

Reference is made to the attached drawings, wherein elements having the same reference number designation may represent like elements throughout.

Where technical features mentioned in any claim are followed by reference signs, those references have been included for the sole purpose of increasing the intelligibility of the claims and accordingly, such reference signs do not have any limiting effect on the interpretation of each element identified by way of example by such reference signs.

The above description of illustrated embodiments of the invention, including what is described in the abstract, is not intended to be exhaustive or to limit the invention to the precise forms disclosed. While specific embodiments of, and examples for, the invention are described herein for illustrative purposes, various equivalent modifications are possible within the scope of the invention, as those skilled in the relevant art will recognize.

These modifications can be made to the invention in light of the above detailed description. The terms used in the following claims should not be construed to limit the invention to the specific embodiments disclosed in the specification and the claims. Rather, the scope of the invention is to be determined entirely by the following claims, which are to be construed in accordance with established doctrines of claim interpretation.

## Claims

1. Method to format messages on communication devices, the method comprising method comprising the steps of:
composing a message in a first communication device;
storing formatting objects in a storage means;
retrieving said formatting objects from said repository during composition of said message;
applying said formatting objects to said message on said first communication device; transmitting said formatted message via a data communication network;
providing means for receiving said message on a second communication device;
decoding said received formatted message on said second communication device;
displaying said formatted message on said second communication device.

2. The method of claim 1, further comprising the step of displaying said message sent from the first communication device on a second communication device where said formatting objects are unavailable, in a plain text format.

3. The method according to claim 2, **characterized in that** said storage means comprises font objects and dictionary objects.

4. The method of claim 1 to 3, **characterized in that** it further comprises the step of applying encoding keys to at least one of the objects located in the storage means.

5. The method according to claim 1, **characterized in that** said first communication device is a mobile terminal and the second communication device is a mobile terminal.

6. The method according to claim 1, **characterized in that** said first communication device is a mobile terminal and the second communication device is a fixed terminal.

7. The method according to claim 6, **characterized in that** said fixed terminal comprises a personal computer, or a workstation, or a server.

8. The method according to claim 5, **characterized in that** the mobile terminal comprises a mobile phone, or a personal digital assistant or a laptop.

9. The method of claim 1, **characterized in that** the first communication device and the second communication device comprise the same fonts and dictionaries accessible by the means for composing the message.

10. The method of claim 3, **characterized in that** said dictionary associates strings, such as characters, words, phrases, etc., with graphics and glyphs.

11. A communication device carrying out the method of claim 1, **characterized in that** it comprises:
- means for inputting characters;
- means for displaying;
- means for storing data;
communication means adapted to send or receive messages transmitted over a data communication network,
means for composing a message;
means for including formatting objects in said message.

12. The communication device according to claim 11, **characterized in that** the data objects comprise fonts and dictionaries.

13. The communication device according to claim 12, **characterized in that** said font comprises at least one table containing objects that correspond to alphanumeric characters and strings for enabling a graphical representation of the messages.

14. The communication device according to claim 13, **characterized in that** said at least one alphanumeric table's objects correspond to inputting characters entered via a device table 441.

15. The communication device according to claim 13, **characterized in that** said at least one alphanumeric table's objects are linked to objects in alphanumeric tables different than said alphanumeric table of claim 13.
